# EUROPEAN PATENT APPLICATION

(11) **EP 4 246 996 A1**
(43) Date of publication of application: **20.09.2023**
(21) Application number: 21890861.4
(22) Date of filing: 11.10.2021
(51) Int. Cl.: H04Q 11/00, H04L 27/26

(54) **PREAMBLE SENDING METHOD AND DEVICE AND PREAMBLE RECEIVING METHOD AND DEVICE**

(30) Priority: 12.11.2020 CN 202011265197
(71) Applicant: ZTE Corporation, Shenzhen, Guangdong 518057 (CN)
(72) Inventor: HUANG, Xingang, Shenzhen, Guangdong 518057 (CN); ZHANG, Weiliang, Shenzhen, Guangdong 518057 (CN); YIN, Yongjia, Shenzhen, Guangdong 518057 (CN)
(74) Representative: Vossius & Partner Patentanwälte Rechtsanwälte mbB
(86) International application number: PCT/CN2021/123120
(87) International publication number: WO 2022/100333

(57) **Abstract**

Provided are a preamble sending method and apparatus and a preamble receiving method and apparatus. The preamble sending method includes sending a preamble containing two or more code pattern sequences, where the two or more code pattern sequences comprise a first code pattern sequence and a second code pattern sequence. That is, by enabling the preamble to support different code pattern sequences, the rapid transmission of the preamble is implemented by using functions corresponding to the different code pattern sequences, and thus the rapid equalization convergence can be performed after the rate of a passive optical network is improved, thereby improving the transmission efficiency and decreasing the processing delay. Through the preceding technical solutions, the problems in the related art that equalization time is long, transmission efficiency is reduced and processing delay is increased due to the fact that a preamble is not conducive to the convergence of an equalizer are solved.

## Description

This application claims priority to Chinese Patent Application No. 202011265197.3 titled "PREAMBLE SENDING METHOD AND APPARATUS AND PREAMBLE RECEIVING METHOD AND APPARATUS" and filed with the China National Intellectual Property Administration (CNIPA) on Nov. 20, 2020, the disclosure of which is incorporated herein by reference in its entirety.

### TECHNICAL FIELD

Embodiments of the present disclosure relate to the field of communications and, specifically, a preamble sending method and apparatus and a preamble receiving method and apparatus.

### BACKGROUND

At present, in the existing art, a passive optical network (PON) adopts time-division multiple access technology in upstream, and different optical network units (ONUs) send upstream burst signals at different times. During the reception, an optical line terminal (OLT) may first carry out burst clock recovery on different burst packets and cannot receive data normally before the clock recovery is completed. To prevent data loss during this time period, a sequence of 1010 is sent for the clock recovery at the upstream burst packet start stage.

With an increased rate of the PON, the transmission performance is affected by different factors such as an insufficient device bandwidth, response flatness, dispersion and receiver response linearity, so it is necessary to add an equalization function to eliminate these adverse effects. The existing preamble is not conducive to the convergence of an equalizer, causing problems that the equalization time is long, the transmission efficiency is reduced and the processing delay is increased.

No effective solution has yet been provided to solve the problems in the related art that the equalization time is long, the transmission efficiency is reduced and the processing delay is increased due to the fact that the preamble is not conducive to the convergence of the equalizer.

### SUMMARY

The embodiments of the present disclosure provide a preamble sending method and apparatus and a preamble receiving method and apparatus to at least solve the problems in the related art that the equalization time is long, the transmission efficiency is reduced and the processing delay is increased due to the fact that the preamble is not conducive to the convergence of the equalizer.

According to an embodiment of the present disclosure, a preamble sending method is provided. The method includes the following: A preamble containing two or more code pattern sequences is sent, where the two or more code pattern sequences include a first code pattern sequence and a second code pattern sequence.

In an example embodiment, the method also includes the following: Configuration information of the preamble in a target message is acquired and construction is performed on the configuration information such that the preamble of the target message supports the two or more code pattern sequences.

In an example embodiment, after the configuration information of the preamble in the target message is acquired and the construction is performed on the configuration information such that the preamble of the target message supports the two or more code pattern sequences, the method further includes the following: A sending rule of the preamble is set in the target message, where the sending rule is used for indicating a sending order of the first code pattern sequence and the second code pattern sequence, and the sending rule includes at least one of the following: The first code pattern sequence of a first target length and the second code pattern sequence of a second target length are alternately sent; the first code pattern sequence of a third target length is continuously sent, and the second code pattern sequence of a fourth target length is sent after sending of the continuously sent first code pattern sequence is completed; or the second code pattern sequence of a fifth target length is continuously sent, and the first code pattern sequence of a sixth target length is sent after sending of the continuously sent second code pattern sequence is completed.

In an example embodiment, the operation in which the configuration information of the preamble in the target message is acquired and the construction is performed on the configuration information such that the preamble of the target message supports the two or more code pattern sequences includes the following: the first code pattern sequence is added to a first target byte in the target message, where the first target byte is used for setting at least one of the following: a preamble length, a preamble repeat count or a preamble pattern; and a target queue of the second code pattern sequence is added to a second target byte in the target message, where the second target byte is an empty to-be-padded byte.

In an example embodiment, the method also includes the following: The length of the second code pattern sequence is set in the target queue; the repeat count number of the second code pattern sequence is set in the target queue; a code pattern of the second code pattern sequence is set in the target queue; and the number of repetitions in which the first code pattern sequence and the second code pattern sequence are alternately sent is set in the target queue.

In an example embodiment, the method also includes the following: In a case where a value of a target byte of the configuration information of the preamble is a target value, the preamble is confirmed to support the first code pattern sequence and the second code pattern sequence, where the first code pattern sequence is used for clock recovery, and the second code pattern sequence is used for training convergence of an equalizer.

According to an embodiment of the present disclosure, a preamble receiving method is further provided. The method includes the following: A preamble containing two or more code pattern sequences is received, where the two or more code pattern sequences include a first code pattern sequence and a second code pattern sequence.

In an example embodiment, the method also includes the following: In a case where the first code pattern sequence of the received preamble includes signal hopping of a target message, clock information corresponding to the time when the signal hopping occurs in the target message is confirmed; and clock recovery is performed according to the clock information on the target message in which the signal hopping has occurred.

In an example embodiment, the method also includes the following: In a case where the second code pattern sequence of the received preamble includes a spectral distribution and a signal hopping frequency of a target message, training convergence is performed on an equalizer through the spectral distribution and the signal hopping frequency.

According to another embodiment of the present disclosure, a preamble sending apparatus is further provided. The apparatus includes a sending module configured to send a preamble containing two or more code pattern sequences, where the two or more code pattern sequences include a first code pattern sequence and a second code pattern sequence.

In an example embodiment, the apparatus also includes an acquisition module configured to acquire configuration information of the preamble in a target message and perform construction on the configuration information such that the preamble of the target message supports the two or more code pattern sequences.

In an example embodiment, the apparatus also includes a first setting module configured to set a sending rule of the preamble in the target message, where the sending rule is used for indicating a sending order of the first code pattern sequence and the second code pattern sequence, and the sending rule includes at least one of the following: The first code pattern sequence of a first target length and the second code pattern sequence of a second target length are alternately sent; the first code pattern sequence of a third target length is continuously sent, and the second code pattern sequence of a fourth target length is sent after sending of the continuously sent first code pattern sequence is completed; or the second code pattern sequence of a fifth target length is continuously sent, and the first code pattern sequence of a sixth target length is sent after sending of the continuously sent second code pattern sequence is completed.

In an example embodiment, the acquisition module is further configured to add the first code pattern sequence to a first target byte in the target message, where the first target byte is used for setting at least one of the following: a preamble length, a preamble repeat count or a preamble pattern; and add a target queue of the second code pattern sequence to a second target byte in the target message, where the second target byte is an empty to-be-padded byte.

In an example embodiment, the apparatus also includes a second setting module configured to: set the length of the second code pattern sequence in the target queue; set the repeat count number of the second code pattern sequence in the target queue; set a code pattern of the second code pattern sequence in the target queue; and set the number of repetitions in which the first code pattern sequence and the second code pattern sequence are alternately resent in the target queue.

In an example embodiment, the apparatus also includes a first confirmation module configured to, in a case where a value of a target byte of the configuration information of the preamble is a target value, confirm that the preamble supports the first code pattern sequence and the second code pattern sequence.

According to another embodiment of the present disclosure, a preamble receiving apparatus is further provided. The apparatus includes a receiving module configured to receive a preamble containing two or more code pattern sequences, where the two or more code pattern sequences include a first code pattern sequence and a second code pattern sequence.

In an example embodiment, the apparatus also includes a second determination module configured to, in a case where the first code pattern sequence of the received preamble includes signal hopping of a target message, confirm clock information corresponding to the time when the signal hopping occurs in the target message; and perform, according to the clock information, clock recovery on the target message in which the signal hopping has occurred.

In an example embodiment, the apparatus also includes a training module configured to, in a case where the second code pattern sequence of the received preamble includes a spectral distribution and a signal hopping frequency of a target message, perform training convergence on an equalizer through the spectral distribution and the signal hopping frequency.

According to another embodiment of the present disclosure, a computer-readable storage medium storing a computer program is further provided, where the computer program is configured to, when executed, perform the operations in any of the preceding method embodiments.

According to another embodiment of the present disclosure, an electronic apparatus is further provided. The electronic apparatus includes a memory and a processor. The memory stores a computer program, and the processor is configured to execute the computer program to perform the operations in any of the preceding method embodiments.

Through the present disclosure, a preamble containing two or more code pattern sequences is sent, where the two or more code pattern sequences include a first code pattern sequence and a second code pattern sequence. That is, by enabling the preamble to support different code pattern sequences, the rapid transmission of the preamble is implemented by using functions corresponding to the different code pattern sequences, and thus the rapid equalization convergence can be performed after the rate of a passive optical network is improved, thereby improving the transmission efficiency and decreasing the processing delay. Through the preceding technical solutions, the problems in the related art that the equalization time is long, the transmission efficiency is reduced and the processing delay is increased due to the fact that the preamble is not conducive to the convergence of the equalizer are solved.

### BRIEF DESCRIPTION OF DRAWINGS

FIG. 1 is a block diagram of a hardware structure of a computer terminal of a preamble sending method according to an embodiment of the present disclosure;
FIG. 2 is a schematic diagram of an application environment of a preamble sending method according to an embodiment of the present disclosure;
FIG. 3 is a flowchart of a preamble sending method according to an embodiment of the present disclosure;
FIG. 4 is a flowchart of a preamble receiving method according to an embodiment of the present disclosure;
FIG. 5 is a block diagram of a preamble sending apparatus according to an embodiment of the present disclosure; and
FIG. 6 is a block diagram of a preamble receiving apparatus according to an embodiment of the present disclosure.

### DETAILED DESCRIPTION

Embodiments of the present disclosure will be described hereinafter in detail with reference to the drawings and in conjunction with embodiments.

It is to be noted that the terms "first", "second" and the like in the description, claims and drawings of the present disclosure are used to distinguish between similar objects and are not necessarily used to describe a particular order or sequence.

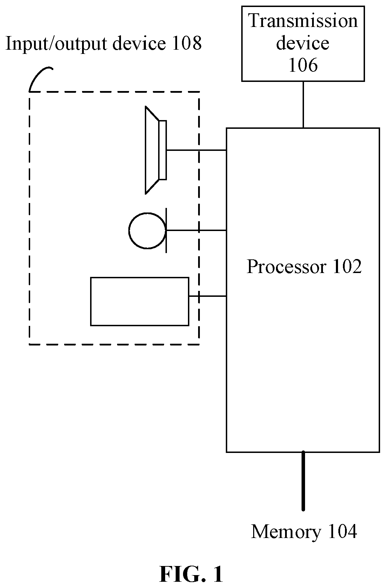

The method embodiments provided by the embodiments of the present disclosure may be executed on a computer terminal or other similar computing apparatuses. The following is described using an example where the method embodiments are executed on a computer terminal. FIG. 1 is a block diagram of a hardware structure of a computer terminal of a preamble sending method according to an embodiment of the present disclosure. As shown in FIG. 1, the computer terminal may include one or more (only one is shown in FIG. 1) processors 102 (the processor 102 may include, but is not limited to, a microprocessor such as a microcontroller unit (MCU), a programmable logic device such as a field-programmable gate array (FPGA), and other processing apparatuses), and a memory 104 used for storing data. The computer terminal may further include a transmission device 106 for a communication function and an input/output device 108. It is to be understood by those of ordinary skill in the art that the structure shown in FIG. 1 is merely illustrative and is not intended to limit the structure of the computer terminal.

For example, the computer terminal may further include more or fewer components than the components shown in FIG. 1 or has a configuration different from the configuration shown in FIG. 1.

The memory 104 may be configured to store a computer program such as a software program and a module of application software, for example, the computer program corresponding to a processing method for sending a preamble in the embodiments of the present disclosure. The processor 102 executes the computer program stored in the memory 104 to perform various functional applications and data processing, that is, to implement the preceding method. The memory 104 may include a high-speed random-access memory, and may further include a nonvolatile memory such as one or more magnetic storage apparatuses, flash memories or other nonvolatile solid-state memories. In some examples, the memory 104 may further include memories that are remotely disposed with respect to the processor 102. These remote memories may be connected to the computer terminal via a network. Examples of the preceding network include, but are not limited to, the Internet, an intranet, a local area network, a mobile communication network and combinations thereof.

The transmission device 106 is configured to receive or send data via a network. The specific examples of the preceding network may include a wireless network provided by a communication provider of the computer terminal. In one example, the transmission device 106 includes a network interface controller (NIC), which may be connected to another network device via a base station and thus can communicate with the Internet. In one example, the transmission device 106 may be a radio frequency (RF) module, which is configured to communicate with the Internet in a wireless way.

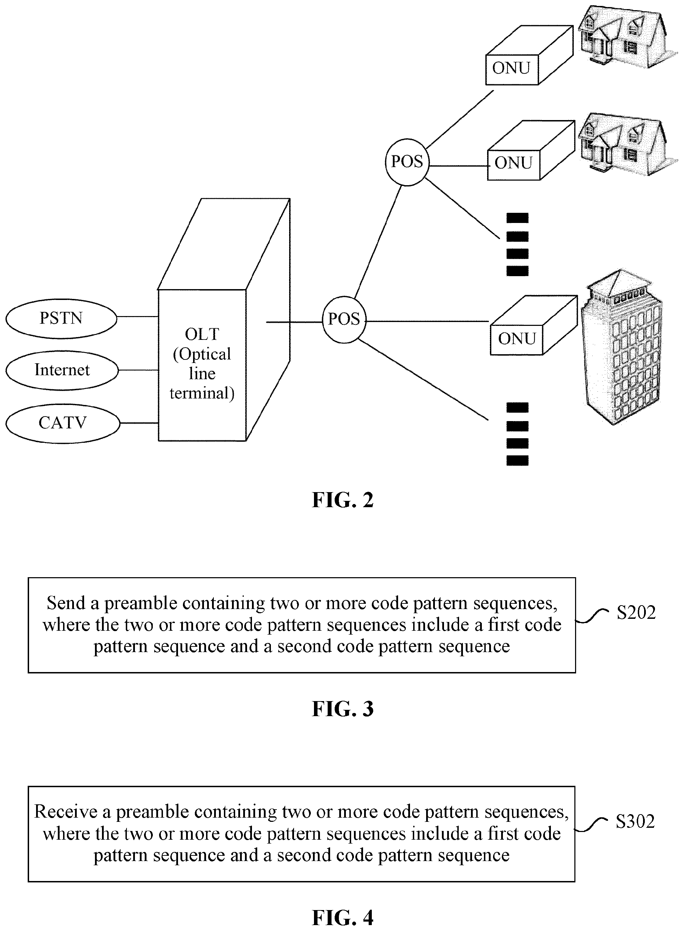

According to an aspect of an embodiment of the present disclosure, a preamble sending method is provided. Optionally, as an optional embodiment, the preamble sending method may be, but is not limited to, applied in the environment shown in FIG. 2.

Optionally, in this embodiment, a system of a PON is provided. The PON is a passive optical network having the point-to-multipoint (P2MP) structure. The PON is composed of an optical line terminal (OLT), optical network units (ONUs), and a passive optical splitter (POS). Moreover, information in a public switched telephone network (PSTN), the Internet and a community antenna television (CATV) which are connected to the OLT is sent to multiple ONUs through the system of the PON. The above setting is only illustrative and is not limited to this embodiment.

This embodiment provides a preamble sending method executed on the preceding computer terminal. FIG. 3 is a flowchart of a preamble sending method according to an embodiment of the present disclosure. As shown in FIG. 3, the method includes the operation S202.

In operation S202, a preamble containing two or more code pattern sequences is sent, where the two or more code pattern sequences include a first code pattern sequence and a second code pattern sequence.

Optionally, the first code pattern sequence may be used for clock recovery, and the second code pattern sequence may be used for training convergence of an equalizer.

Through the present disclosure, a preamble containing two or more code pattern sequences is sent, where the two or more code pattern sequences include a first code pattern sequence and a second code pattern sequence. That is, by enabling the preamble to support different code pattern sequences, the rapid transmission of the preamble is implemented by using functions corresponding to the different code pattern sequences, and thus the rapid equalization convergence can be performed after the rate of a passive optical network is improved, thereby improving the transmission efficiency and decreasing the processing delay. Through the preceding technical solutions, the problems in the related art that the equalization time is long, the transmission efficiency is reduced and the processing delay is increased due to the fact that the preamble is not conducive to the convergence of the equalizer are solved.

The execution subject of the above operation may be a base station or a terminal, but is not limited thereto.

In an example embodiment, the method also includes the following: Configuration information of the preamble in a target message is acquired and construction is performed on the configuration information such that the preamble of the target message supports the two or more code pattern sequences.

That is, to better enable the preamble in the target message to be used for transmission, after a target message required to be transmitted is confirmed, the configuration information of the target message is acquired, and the configuration information of the target message is reconstructed according to the code pattern sequence of a to-be-sent preamble containing two or more code pattern sequences such that the reconstructed preamble of the target message supports transmission of the two or more code pattern sequences.

In an example embodiment, after the configuration information of the preamble in the target message is acquired and the construction is performed on the configuration information such that the preamble of the target message supports the two or more code pattern sequences, the method also includes the following: A sending rule of the preamble is set in the target message, where the sending rule is used for indicating a sending order of the first code pattern sequence and the second code pattern sequence, and the sending rule includes at least one of the following: The first code pattern sequence of a first target length and the second code pattern sequence of a second target length are alternately sent; the first code pattern sequence of a third target length is continuously sent, and the second code pattern sequence of a fourth target length is sent after sending of the continuously sent first code pattern sequence is completed; or the second code pattern sequence of a fifth target length is continuously sent, and the first code pattern sequence of a sixth target length is sent after sending of the continuously sent second code pattern sequence is completed.

In short, to ensure that the reconstructed preamble in the target message can be sent orderly, a sending rule of the constructed preamble may also be set in the target message and may include the number of sending times that the first code pattern sequence and the second code pattern sequence of the two or more code pattern sequences contained in the reconstructed preamble are alternately sent, thereby improving the transmission efficiency.

In an example embodiment, the operation in which the configuration information of the preamble in the target message is acquired and the construction is performed on the configuration information such that the preamble of the target message supports the two or more code pattern sequences includes the following: The first code pattern sequence is added to a first target byte in the target message, where the first target byte is used for setting at least one of the following: a preamble length, a preamble repeat count or a preamble pattern; and a target queue of the second code pattern sequence is added to a second target byte in the target message, where the second target byte is an empty to-be-padded byte.

In an example embodiment, the method further includes the following: The length of the second code pattern sequence is set in the target queue; the repeat count number of the second code pattern sequence is set in the target queue; a code pattern of the second code pattern sequence is set in the target queue; and the number of repetitions in which the first code pattern sequence and the second code pattern sequence are alternately resent is set in the target queue.

For example, when the target message is a burst profile physical layer operation administration and management (PLOAM) message, relevant fields of the burst profile PLOAM message are reconstructed based on the existing standards. The 16^{th} byte in the standards represents the length of the first code pattern sequence, the 17^{th} byte represents the number of repetitions of the first code pattern sequence, and the 18^{th} to 25^{th} bytes represent the code pattern of the first code pattern sequence in the preamble; the 34^{th} byte represents the length of the second code pattern sequence, the 35^{th} byte represents the number of repetitions of the second code pattern sequence, and the 36^{th} to 40^{th} bytes represent the code pattern of the second code pattern sequence; or the 36^{th} to 39^{th} bytes may be used for representing the code pattern of the second code pattern sequence, and the 40^{th} byte may be used for representing the number of repetitions in which the first code pattern sequence and the second code pattern sequence are alternately sent.

It is to be noted that the definitions of the above different bytes are not limited to the above contents. For example, the 34^{th} byte is used for representing the number of repetitions in which the first code pattern sequence and the second code pattern sequence are alternately sent, or the 34^{th} byte is used for representing the number of repetitions of the second code pattern sequence, and the 40^{th} byte is used for representing the number of repetitions of the first code pattern sequence. The above are only illustrative, may be set in other manners and are not limited to the present disclosure.

In an example embodiment, the method also includes the following: In a case where a value of a target byte of the configuration information of the preamble is a target value, it is confirmed that the preamble supports the first code pattern sequence and the second code pattern sequence, where the first code pattern sequence is used for clock recovery, and the second code pattern sequence is used for training convergence of an equalizer.

To ensure that the reconstructed preamble can support two or more code pattern sequences, after the construction is completed, the preamble may be confirmed to support the first code pattern sequence and the second code pattern sequence in the case where the value of the target byte of the configuration information of the preamble is the target value.

For example, the 5^{th} bit of the 5^{th} byte of the burst profile PLOAM message defined in the existing standards may be defined to represent whether the preamble of multiple code patterns is supported, where the 5^{th} byte is an octet of the form VVVV0FPP. Optionally, when the 5^{th} binary digit (bit for short) is 0, it represents that the burst profile PLOAM message does not support the preamble of multiple code patterns, and when the 5^{th} bit is 1, it represents that the burst profile PLOAM message supports the preamble of multiple code patterns.

FIG. 4 is a flowchart of a preamble receiving method according to an embodiment of the present disclosure. As shown in FIG. 4, the method includes the operation S302.

In operation S302, a preamble containing two or more code pattern sequences is received, where the two or more code pattern sequences include a first code pattern sequence and a second code pattern sequence.

Optionally, the first code pattern sequence is used for clock recovery, and the second code pattern sequence is used for training convergence of an equalizer.

Through the present disclosure, a preamble containing two or more code pattern sequences is received, where the two or more code pattern sequences include a first code pattern sequence and a second code pattern sequence; the first code pattern sequence is used for clock recovery, and the second code pattern sequence is used for training convergence of an equalizer. That is, by enabling the preamble to support different code pattern sequences, the rapid transmission of the preamble is implemented by using functions corresponding to the different code pattern sequences, and thus the rapid equalization convergence can be performed after the rate of a passive optical network is improved, thereby improving the transmission efficiency and decreasing the processing delay. Through the preceding technical solutions, the problems in the related art that the equalization time is long, the transmission efficiency is reduced and the processing delay is increased due to the fact that the preamble is not conducive to the convergence of the equalizer are solved.

In an example embodiment, the method also includes the following: In a case where the first code pattern sequence of the received preamble includes signal hopping of a target message, clock information corresponding to the time when the signal hopping occurs in the target message is confirmed; and clock recovery is performed according to the clock information on the target message in which the signal hopping has occurred.

Since the first code pattern sequence is used for the clock recovery, the first code pattern sequence contains more signal hopping information and has abundant clock information. For example, the first code pattern sequence may be a 1010-type code pattern sequence in which 0 and 1 are spaced and have the same number of bits. Furthermore, when the received target message carries the clock information corresponding to the time when the signal hopping occurs, the clock recovery may be performed on the target message in which the signal hopping occurs through the clock information, thereby shortening the time for processing the target message in which the signal hopping occurs and improving the transmission efficiency.

In an example embodiment, the method also includes the following: In a case where the second code pattern sequence of the received preamble contains a spectral distribution and a signal hopping frequency of a target message, training convergence is performed on an equalizer through the spectral distribution and the signal hopping frequency.

Since the second code pattern sequence is used for the training convergence of an equalizer, the second code pattern sequence needs to have the spectrum distribution as flat as possible, a signal hopping frequency and a "1" bit and "0" bit distribution similar to that of the data. For example, the second code pattern sequence may be a pseudo-random sequence and thus enables the equalizer to have good equalization compensation for a transmission link.

It is to be noted that when the first code pattern sequence and the second code pattern sequence include multiple predefined code pattern sequences, to facilitate management and construction of the target message, one number may be assigned to each code pattern. For example, a sequence of repeated 1010 can be assigned number 1, a random code of (2^7 - 1) can be assigned number 2, and a pseudo-random code of (2^15 - 1) can be assigned number 3. Optionally, the byte representing the code pattern length or the code pattern sequence in the preceding embodiments may also be defined as the code pattern sequence number.

To better understand the processing flow of the above-mentioned preamble, the above-mentioned technical solutions are described below in conjunction with the optional embodiments which are not used to limit the technical solutions of the embodiments of the present disclosure.

An optional embodiment of the present disclosure provides a new preamble design in which a preamble contains two or more code pattern sequences, a code pattern sequence 1 (corresponding to the first code pattern sequence in the embodiments of the present disclosure) is used for clock recovery, and a code pattern sequence 2 (corresponding to the second code pattern sequence in the embodiments of the present disclosure) is used for training convergence of an equalizer. The code pattern sequence 1 and the code pattern sequence 2 may be alternately sent; or a certain length of the code pattern sequence 1 is continuously sent and then a certain length of the code pattern sequence 2 is sent; or a certain length of the code pattern sequence 2 is continuously sent and then a certain length of the code pattern sequence 1 is sent.

Optionally, the code pattern sequence 1 for the clock recovery may be designed to contain the maximum number of signal hopping and thus contains abundant clock information, for example, the code pattern sequence 1 may be a 1010 sequence to facilitate the clock recovery. Since the code pattern sequence 2 for the training convergence of an equalizer needs to have the spectrum distribution as flat as possible, the signal hopping frequency and the "1" bit and "0" bit distribution similar to that of the data, the code pattern sequence 2 may be a pseudo-random sequence and thus enables the equalizer to have the good equalization compensation for the transmission link.

The ONU in the system of the PON is a slave device, and the preamble information needs to be sent by the OLT to the ONU. The preamble information is sent through the burst profile PLOAM message in the Gigabit-capable passive optical networks (GPONs) and 10-Gigabit-capable passive optical networks (XGPON). In an optional embodiment of the present disclosure, a new preamble profile message supporting two code patterns is constructed by modifying the burst profile message in the existing standards. Since the modification to the existing standards is small, the existing ONU may be compatible. Table 1 is the burst profile message format which is in a time and wavelength division multiplexing (TWDM) PON and defined by the existing ITU-T G.989.3.

### Table 1

**Table 11-4 - Burst_Profile message - TWDM format option**

| **Octet** | **Content** | **Description** |
|---|---|---|
| 1-2 | ONU-ID | Directed message to one ONU or broadcast message to all ONUs. As a broadcast to all ONUs, ONU-ID = 0x03FF. |
| 3 | Message type ID | 0x01, "Burst_Profile". |
| 4 | SeqNo | Eight-bit unicast or broadcast PLOAM sequence number, as appropriate. |

| **Table 11-4 - Burst_Profile message - TWDM format option** | | |
|---|---|---|
| **Octet** | **Content** | **Description** |
| 5 | Burst profile control | An octet of the form VVVV 0FPP, where: |
| | | VVVV - Four-bit profile version. If the content of the profile changes, the OLT CT should ensure that the version also changes, so that the ONU can detect updates solely on the basis of the version field. |
| | | F - Applicability of the message to specific upstream line rates: |
| | | F = 0: The profile applies to ONUs transmitting at 2.48832 Gbit/s upstream line rate. |
| | | F = 1: The profile applies to ONUs transmitting at 9.95328 Gbit/s upstream line rate. |
| | | PP - Two-bit burst profile index. |
| 6 | Upstream FEC indication | 0000 000F, where: |
| | | F = 1: FEC on; |
| | | F = 0: FEC off. |
| 7 | Delimiter length | 0000 DDDD, where: |
| | | DDDD - Delimiter length in octets; four-bit integer, range 0..8. |
| 8-15 | Delimiter | Aligned with the most significant end of the field; padded with 0x00; padding treated as "don't care" by the receiver. |
| 16 | Preamble length | 0000 LLLL, where: |
| | | LLLL - Preamble length in octets; four-bit integer; range 1..8. |
| 17 | Preamble repeat count | Eight-bit preamble repeat count, range from 0 to 255. The value 0 specifies that no preamble is transmitted. |
| 18-25 | Preamble pattern | Preamble pattern, aligned with the most significant end of the field; padded with 0x00; padding treated as "don't care" by the receiver. |
| 26-33 | PON-TAG | An 8-byte static attribute of the OLT CT that is chosen by the operator and is used to bind the master session key (MSK) to the context of the security association (see clause 15.3.3). Unless the profile version is incremented, PON-TAG is the same for Burst_Profile messages with all profile indices transmitted by the OLT CT. It is good practice to ensure that PON-TAG is unique within the OLT CTs belonging to a common NG2SYS ID and fixed for the lifetime of the system. |
| 34-40 | Padding | Set to 0x00 by the transmitter; treated as "don't care" by the receiver. |
| 41-48 | MIC | Message integrity check, computed using the default PLOAM_IK in case of broadcast message, and using the ONU-specific derived shared PLOAM_IK in case of directed message. |

An optional embodiment of the present disclosure also provides a method for constructing a burst profile message. The 5^{th} bit of the 5^{th} byte of the burst profile PLOAM message defined by the existing standards is used for representing whether the preamble of multiple code patterns is supported, and the relevant fields of the preamble in the existing standards are used for representing related definitions of the code pattern sequence 1. For example, the 16^{th} byte represents the length of the code pattern sequence 1, the 17^{th} byte represents the number of repetitions of the code pattern sequence 1, and the 18^{th} to 25^{th} bytes represent the code pattern sequence 1 in the preamble; the 34^{th} to 40^{th} bytes in the existing standards are used for representing the length of the code pattern sequence 2, related definitions of the code pattern, and a combination manner of the code pattern sequence 1 and the code pattern sequence 2.

Optionally, when the 5^{th} bit is 0, it represents that the burst profile PLOAM message does not support the preamble of multiple code patterns, and when the 5^{th} bit is 1, it represents that the burst profile PLOAM message supports the preamble of multiple code patterns. Alternatively, it may also be defined that when the 5^{th} bit is 1, it represents that the burst profile PLOAM message does not support the preamble of multiple code patterns, and that when the 5^{th} bit is 0, it represents that the burst profile PLOAM message supports the preamble of multiple code patterns, which is not limited to this optional embodiment of the present disclosure.

Optionally, when the 34^{th} to 40^{th} bytes in the existing standards are constructed, the 34^{th} byte may be used for representing the length of the code pattern sequence 2, the 35^{th} byte may be used for representing the number of repetitions of the code pattern sequence 2, and the 36^{th} to 40^{th} bytes may be used for representing the code pattern of the code pattern sequence 2; or the 36^{th} to 39^{th} bytes represent the code pattern of the code pattern sequence 2, and the 40^{th} byte represents the number of repetitions in which the code pattern sequence 1 and the code pattern sequence 2 are alternately sent, as shown in the following Table 2:

**Table 2**

| | |
|---|---|
| 34-40 | Length of the code pattern sequence 2 |
| | Number of repetitions of the code pattern sequence 2 |
| | Code pattern of the code pattern sequence 2 |
| | Number of repetitions in which the code pattern sequence 1 and the code pattern sequence 2 are alternately sent |

The definitions of the above different bytes are not limited to the above content. For example, the 34^{th} byte is used for representing the number of repetitions in which the first code pattern sequence and the second code pattern sequence are alternately sent, or the 34^{th} byte is used for representing the number of repetitions of the second code pattern sequence and the 40^{th} byte is used for representing the number of repetitions of the first code pattern sequence. The above are only illustrative, may be set in other manners and are not limited to this optional embodiment of the present disclosure.

It is to be noted that when the code pattern sequence 1 and the code pattern sequence 2 include multiple predefined code pattern sequences, one number may be assigned to each code pattern. For example, a sequence of repeated 1010 can be assigned number 1, a random code of (2^7 - 1) can be assigned number 2, and a pseudo-random code of (2^15 - 1) can be assigned number 3. The byte representing the code pattern length or the code pattern sequence in the preceding methods is defined as the code pattern sequence number.

Through the preceding technical solutions, the optional embodiment of the present disclosure provides a preamble sending method. By sending a preamble containing two or more code pattern sequences and using the preset characteristics of the code pattern sequence 1 and the code pattern sequence 2, the message of the preamble containing the preceding code pattern sequences can be rapidly sent. That is, by enabling the preamble to support different code pattern sequences, the rapid transmission of the preamble is implemented by using functions corresponding to the different code pattern sequences, and thus the rapid equalization convergence can be performed after the rate of a passive optical network is improved, thereby improving the transmission efficiency and decreasing the processing delay.

From the description of the preceding embodiments, it is apparent to those skilled in the art that the method in the preceding embodiments may be implemented by software plus a necessary general-purpose hardware platform or may of course be implemented by hardware. However, in many cases, the former is a preferred implementation. Based on this understanding, the technical solutions provided in the present disclosure substantially, or the part contributing to the existing art, may be embodied in the form of a software product. The software product is stored in a storage medium (such as read-only memory (ROM)/random-access memory (RAM), a magnetic disk or an optical disk) and includes several instructions for enabling a terminal device (which may be a mobile phone, a computer, a server or a network device) to perform the method according to each embodiment of the present disclosure.

This embodiment further provides a preamble sending apparatus. The apparatus is configured to perform the preceding embodiments and preferred implementations. What has been described will not be repeated. As used below, the term "module" may be software, hardware or a combination thereof capable of implementing predetermined functions. Although the apparatus in the embodiments described below may preferably be implemented in software, implementations in hardware or a combination of software and hardware is also possible and contemplated.

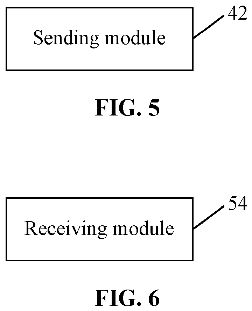

FIG. 5 is a block diagram of a preamble sending apparatus according to an embodiment of the present disclosure. As shown in FIG. 5, the apparatus includes a sending module 42.

The sending module 42 is configured to send a preamble containing two or more code pattern sequences, where the two or more code pattern sequences include a first code pattern sequence and a second code pattern sequence.

Through the present disclosure, a preamble containing two or more code pattern sequences is sent, where the two or more code pattern sequences include a first code pattern sequence and a second code pattern sequence. That is, by enabling the preamble to support different code pattern sequences, the rapid transmission of the preamble is implemented by using functions corresponding to the different code pattern sequences, and thus the rapid equalization convergence can be performed after the rate of a passive optical network is improved, thereby improving the transmission efficiency and decreasing the processing delay. Through the preceding technical solutions, the problems in the related art that the equalization time is long, the transmission efficiency is reduced and the processing delay is increased due to the fact that the preamble is not conducive to the convergence of the equalizer are solved.

In an example embodiment, the apparatus also includes an acquisition module 44 configured to acquire configuration information of the preamble in a target message and perform construction on the configuration information such that the preamble of the target message supports the two or more code pattern sequences.

That is, to better enable the preamble in the target message to be used for transmission, after a target message required to be transmitted is confirmed, the configuration information of the target message is acquired, and the configuration information of the target message is reconstructed according to the code pattern sequence of a to-be-sent preamble containing two or more code pattern sequences such that the reconstructed preamble of the target message supports the transmission of the two or more code pattern sequences.

In an example embodiment, the apparatus also includes a first setting module 46 configured to set a sending rule of the preamble in the target message, where the sending rule is used for indicating a sending order of the first code pattern sequence and the second code pattern sequence, and the sending rule includes at least one of the following: The first code pattern sequence of a first target length and the second code pattern sequence of a second target length are alternately sent; the first code pattern sequence of a third target length is continuously sent, and the second code pattern sequence of a fourth target length is sent after sending of the continuously sent first code pattern sequence is completed; or the second code pattern sequence of a fifth target length is continuously sent, and the first code pattern sequence of a sixth target length is sent after sending of the continuously sent second code pattern sequence is completed.

In short, to ensure that the reconstructed preamble in the target message can be sent orderly, a sending rule of the constructed preamble may also be set in the target message and may include the number of sending times that the first code pattern sequence and the second code pattern sequence of the two or more code pattern sequences contained in the reconstructed preamble are alternately sent, thereby improving the transmission efficiency.

In an example embodiment, the acquisition module 48 is also configured to: add the first code pattern sequence to a first target byte in the target message, where the first target byte is used for setting at least one of the following: a preamble length, a preamble repeat count or a preamble pattern; and add a target queue of the second code pattern sequence to a second target byte in the target message, where the second target byte is an empty to-be-padded byte.

In an example embodiment, the apparatus also includes a second setting module 50 configured to: set the length of the second code pattern sequence in the target queue; set the repeat count number of the second code pattern sequence in the target queue; set a code pattern of the second code pattern sequence in the target queue; and set the number of repetitions in which the first code pattern sequence and the second code pattern sequence are alternately resent in the target queue.

For example, when the target message is a burst profile PLOAM message, the relevant fields of the burst profile PLOAM message are reconstructed based on the existing standards. The 16^{th} byte in the standards represents the length of the first code pattern sequence, the 17^{th} byte represents the number of repetitions of the first code pattern sequence, and the 18^{th} to 25^{th} bytes represent the code pattern of the first code pattern sequence in the preamble; the 34^{th} byte represents the length of the second code pattern sequence, the 35^{th} byte represents the number of repetitions of the second code pattern sequence, and the 36^{th} to 40^{th} bytes represent the code pattern of the second code pattern sequence; or the 36^{th} to 39^{th} bytes may be used for representing the code pattern of the second code pattern sequence, and the 40^{th} byte may be used for representing the number of repetitions in which the first code pattern sequence and the second code pattern sequence are alternately sent.

It is to be noted that the definitions of the above different bytes are not limited to the above contents. For example, the 34^{th} byte is used for representing the number of repetitions in which the first code pattern sequence and the second code pattern sequence are alternately sent, or the 34^{th} byte is used for representing the number of repetitions of the second code pattern sequence and the 40^{th} byte is used for representing the number of repetitions of the first code pattern sequence. The above are only illustrative, may be set in other manners and are not limited to the present disclosure.

In an example embodiment, the apparatus also includes a first confirmation module 52 configured to, in a case where a value of a target byte of the configuration information of the preamble is a target value, confirm that the preamble supports the first code pattern sequence and the second code pattern sequence, where the first code pattern sequence is used for clock recovery, and the second code pattern sequence is used for training convergence of an equalizer.

To ensure that the reconstructed preamble can support two or more code pattern sequences, after the construction is completed, it may be confirmed that the preamble supports the first code pattern sequence and the second code pattern sequence in the case where the value of the target byte of the configuration information of the preamble is the target value.

FIG. 6 is a block diagram of a preamble receiving apparatus according to an embodiment of the present disclosure. As shown in FIG. 6, the apparatus includes a receiving module 54.

The receiving module 54 is configured to receive a preamble containing two or more code pattern sequences, where the two or more code pattern sequences include a first code pattern sequence and a second code pattern sequence.

Optionally, the first code pattern sequence is used for clock recovery, and the second code pattern sequence is used for training convergence of an equalizer.

Through the present disclosure, a preamble containing two or more code pattern sequences is received, where the two or more code pattern sequences include a first code pattern sequence and a second code pattern sequence, the first code pattern sequence is used for clock recovery, and the second code pattern sequence is used for training convergence of an equalizer. That is, by enabling the preamble to support different code pattern sequences, the rapid transmission of the preamble is implemented by using functions corresponding to the different code pattern sequences, and thus the rapid equalization convergence can be performed after the rate of a passive optical network is improved, thereby improving the transmission efficiency and decreasing the processing delay. Through the preceding technical solutions, the problems in the related art that the equalization time is long, the transmission efficiency is reduced and the processing delay is increased due to the fact that the preamble is not conducive to the convergence of the equalizer are solved.

In an example embodiment, the apparatus also includes a second determination module 56 configured to, in a case where the first code pattern sequence of the received preamble contains signal hopping of a target message, confirm clock information corresponding to the time when the signal hopping occurs in the target message; and perform, according to the clock information, the clock recovery on the target message in which the signal hopping has occurred.

Since the first code pattern sequence is used for the clock recovery, the first code pattern sequence includes more signal hopping information and has abundant clock information. For example, the first code pattern sequence may be a 1010-type code pattern sequence in which 0 and 1 are spaced and have the same number of bits. Further, when the received target message carries the clock information corresponding to the time when the signal hopping occurs, the clock recovery may be performed on the target message in which the signal hopping occurs through the clock information, thereby shortening the time for processing the target message in which the signal hopping occurs and improving the transmission efficiency.

In an example embodiment, the apparatus also includes a training module 58 configured to, in a case where the second code pattern sequence of the received preamble contains a spectral distribution and a signal hopping frequency of a target message, perform training convergence on an equalizer through the spectral distribution and the signal hopping frequency.

Since the second code pattern sequence is used for the training convergence of an equalizer, the second code pattern sequence needs to have the spectrum distribution as flat as possible, the signal hopping frequency and the " 1" bit and "0" bit distribution similar to that of the data. For example, the second code pattern sequence may be a pseudo-random sequence and thus enables the equalizer to have good equalization compensation for the transmission link.

It is to be noted that when the first code pattern sequence and the second code pattern sequence include multiple predefined code pattern sequences, to facilitate management and construction of the target message, one number may be assigned to each code pattern. For example, a sequence of repeated 1010 can be assigned number 1, a random code of (2^7 - 1) can be assigned number 2, and a pseudo-random code of (2^15 - 1) can be assigned number 3. Optionally, the byte representing the code pattern length or the code pattern sequence in the preceding embodiments may also be defined as the code pattern sequence number.

It is to be noted that the various modules described above may be implemented by software or hardware. The implementation by hardware may, but may not necessarily, be performed in the following manner: the preceding modules are located in the same processor or located in different processors in any combination form.

An embodiment of the present disclosure further provides a computer-readable storage medium. The computer-readable storage medium stores a computer program, and the computer program is configured to, when executed, perform operations in any of the preceding method embodiments.

In an example implementation, the computer-readable storage medium may include, but is not limited to, a universal serial bus (USB) flash drive, a read-only memory (ROM), a random-access memory (RAM), a mobile hard disk, a magnetic disk, an optical disc or another medium capable of storing a computer program.

An embodiment of the present disclosure further provides an electronic apparatus. The electronic apparatus includes a memory and a processor. The memory stores a computer program. The processor is configured to execute the computer program to perform the operations in any of the preceding method embodiments.

In an example embodiment, the electronic apparatus may further include a transmission device and an input/output device. The transmission device is connected to the processor, and the input/output device is connected to the processor.

For specific examples in this embodiment, reference may be made to the examples described in the preceding embodiments and example implementations, and the details will not be repeated here.

Apparently, it is to be understood by those skilled in the art that the modules or operations in embodiments of the present disclosure may be implemented by a general-purpose computing device and may be concentrated on a single computing device or distributed in a network formed by multiple computing devices. These modules or operations may be implemented by program codes executable by the computing device. Thus, these modules or operations may be stored in a storage medium and executed by the computing device. Moreover, in some cases, the illustrated or described operations may be executed in a sequence different from the sequence described herein. Alternatively, each module or operation may be implemented by being made into an integrated circuit module or multiple ones of these modules or operations may be implemented by being made into a single integrated circuit module. In this manner, the present disclosure is not limited to any specific combination of hardware and software.

The preceding are only preferred embodiments of the present disclosure and are not intended to limit the present disclosure. For those skilled in the art, the present disclosure may have various modifications and variations. Any modifications, equivalent substitutions, improvements and the like within the principle of the present disclosure are within the scope of the present disclosure.

## Claims

1. A preamble sending method, comprising:
sending a preamble containing two or more code pattern sequences, wherein the two or more code pattern sequences comprise a first code pattern sequence and a second code pattern sequence.

2. The method of claim 1, further comprising:
acquiring configuration information of the preamble in a target message and performing construction on the configuration information to enable the preamble of the target message to support the two or more code pattern sequences.

3. The method of claim 2, after acquiring the configuration information of the preamble in the target message and performing construction on the configuration information to enable the preamble of the target message to support the two or more code pattern sequences, further comprising:
setting a sending rule of the preamble in the target message, wherein the sending rule is used for indicating a sending order of the first code pattern sequence and the second code pattern sequence, and the sending rule comprises at least one of the following:
alternately sending the first code pattern sequence of a first target length and the second code pattern sequence of a second target length;
continuously sending the first code pattern sequence of a third target length, and sending the second code pattern sequence of a fourth target length after sending of the continuously sent first code pattern sequence is completed; or
continuously sending the second code pattern sequence of a fifth target length, and sending the first code pattern sequence of a sixth target length after sending of the continuously sent second code pattern sequence is completed.

4. The method of claim 2, wherein acquiring the configuration information of the preamble in the target message and performing the construction on the configuration information to enable the preamble of the target message to support the two or more code pattern sequences comprises:
adding the first code pattern sequence to a first target byte in the target message, wherein the first target byte is used for setting at least one of the following: a preamble length, a preamble repeat count or a preamble pattern; and
adding a target queue of the second code pattern sequence to a second target byte in the target message, wherein the second target byte is an empty to-be-padded byte.

5. The method of claim 4, further comprising:
setting a length of the second code pattern sequence in the target queue;
setting a repeat count number of the second code pattern sequence in the target queue;
setting a code pattern of the second code pattern sequence in the target queue; and
setting, in the target queue, a number of repetitions in which the first code pattern sequence and the second code pattern sequence are alternately resent.

6. The method of any one of claims 1 to 5, further comprising: in a case where a value of a target byte of configuration information of the preamble is a target value, confirming that the preamble supports the first code pattern sequence and the second code pattern sequence, wherein the first code pattern sequence is used for clock recovery, and the second code pattern sequence is used for training convergence of an equalizer.

7. A preamble receiving method, comprising:
receiving a preamble containing two or more code pattern sequences, wherein the two or more code pattern sequences comprise a first code pattern sequence and a second code pattern sequence.

8. The method of claim 7, further comprising:
in a case where the first code pattern sequence of the received preamble contains signal hopping of a target message, confirming clock information corresponding to a time when the signal hopping occurs in the target message; and
performing, according to the clock information, clock recovery on the target message in which the signal hopping has occurred.

9. The method of claim 7, further comprising:
in a case where the second code pattern sequence of the received preamble contains a spectral distribution of a target message and a signal hopping frequency of the target message, performing training convergence on an equalizer through the spectral distribution and the signal hopping frequency.

10. A preamble sending apparatus, comprising:
a sending module configured to send a preamble containing two or more code pattern sequences, wherein the two or more code pattern sequences comprise a first code pattern sequence and a second code pattern sequence.

11. The apparatus of claim 10, further comprising an acquisition module configured to acquire configuration information of the preamble in a target message and perform construction on the configuration information to enable the preamble of the target message to support the two or more code pattern sequences.

12. The apparatus of claim 11, further comprising: a first setting module configured to set a sending rule of the preamble in the target message, wherein the sending rule is used for indicating a sending order of the first code pattern sequence and the second code pattern sequence, and the sending rule comprises at least one of the following: alternately sending the first code pattern sequence of a first target length and the second code pattern sequence of a second target length; continuously sending the first code pattern sequence of a third target length, and sending the second code pattern sequence of a fourth target length after sending of the continuously sent first code pattern sequence is completed; or continuously sending the second code pattern sequence of a fifth target length, and sending the first code pattern sequence of a sixth target length after sending of the continuously sent second code pattern sequence is completed.

13. The apparatus of claim 11, wherein the acquisition module is further configured to add the first code pattern sequence to a first target byte in the target message, wherein the first target byte is used for setting at least one of the following: a preamble length, a preamble repeat count or a preamble pattern; and add a target queue of the second code pattern sequence to a second target byte in the target message, wherein the second target byte is an empty to-be-padded byte.

14. A preamble receiving apparatus, comprising:
a receiving module configured to receive a preamble containing two or more code pattern sequences, wherein the two or more code pattern sequences comprise a first code pattern sequence and a second code pattern sequence.

15. The apparatus of claim 14, further comprising:
a second determination module configured to, in a case where the first code pattern sequence of the received preamble contains signal hopping of a target message, confirm clock information corresponding to a time when the signal hopping occurs in the target message; and perform, according to the clock information, clock recovery on the target message in which the signal hopping has occurred.

16. The apparatus of claim 15, further comprising:
a training module configured to, in a case where the second code pattern sequence of the received preamble contains a spectral distribution of the target message and a signal hopping frequency of the target message, perform training convergence on an equalizer through the spectral distribution and the signal hopping frequency.

17. A computer-readable storage medium storing a computer program, wherein the computer program is configured to, when executed, perform the method of any one of claims 1 to 6 or the method of any one of claims 7 to 9.

18. An electronic apparatus, comprising a memory and a processor, wherein the memory stores a computer program, and the processor is configured to execute the computer program to perform the method of any one of claims 1 to 6 or the method of any one of claims 7 to 9.
